(19) **Europäisches Patentamt**

**European Patent Office**

**Office européen des brevets**

(11) **EP 0 619 502 B1**

(12) **EUROPEAN PATENT SPECIFICATION**

(45) Date of publication and mention
of the grant of the patent:
**16.02.2000 Bulletin 2000/07**

(51) Int. Cl.[7]: **G01S 17/88**, G01S 17/42,
G01S 7/48

(21) Application number: **94105277.1**

(22) Date of filing: **05.04.1994**

(54) **Scanning optical rangefinder**

Optischer Abtaster und Entfernungsmesser

Télémètre optique à balayage

(84) Designated Contracting States:
**DE FR IT NL SE**

(30) Priority: **08.04.1993 US 38767**

(43) Date of publication of application:
**12.10.1994 Bulletin 1994/41**

(73) Proprietor:
**KOLLMORGEN CORPORATION
Waltham, MA 02154 (US)**

(72) Inventor: **Taylor, William H.
South Deerfield, MA 01373 (US)**

(74) Representative:
**Königseder-Egerer, Claudia D.
Kreuzbichl 1
82491 Grainau (DE)**

(56) References cited:
**EP-A- 0 170 038       EP-A- 0 473 866
WO-A-90/09142        DE-A- 3 502 634
DE-A- 4 108 057       GB-A- 2 070 879
GB-A- 2 101 352       GB-A- 2 135 789**

**Description**

The invention relates to systems for providing range and lateral position data on targets. More particularly, the invention relates to systems for simultaneously providing range and lateral position data on targets for collision avoidance. In addition, scene reflectance data is acquired for each pixel and form the basis for creating an ordinary scene image.

Typically, a target, or multiple targets, lies within a field of view which is rectangular in shape. The position of a target within the field of view may be defined by its angular coordinates, $\alpha$ and $\beta$, corresponding, respectively, to the azimuth (horizontal) and elevation (vertical) directions. In an extreme case, each image cell or pixel within the field of view lies at a different range. It is, therefore, desirable to create a "3D map" of a scene by assigning a range value to each pixel within the field of view.

There are different methods for obtaining this range information. One method is to use the principle of triangulation wherein the range of a target is derived from knowledge of the directions of the lines of sight from two viewing points to the target. This is a well known and widely used rangefinding technique for single targets. However, where multiple targets are spread over a large field of view, the complexity of the problem can become excessive, particularly, if the "3D map" must be created and analyzed quickly. A further problem is that a large field of view and high resolution requirements can dictate the use of an imaging detector with a prohibitively large size and large number of elements and high cost as shown below.

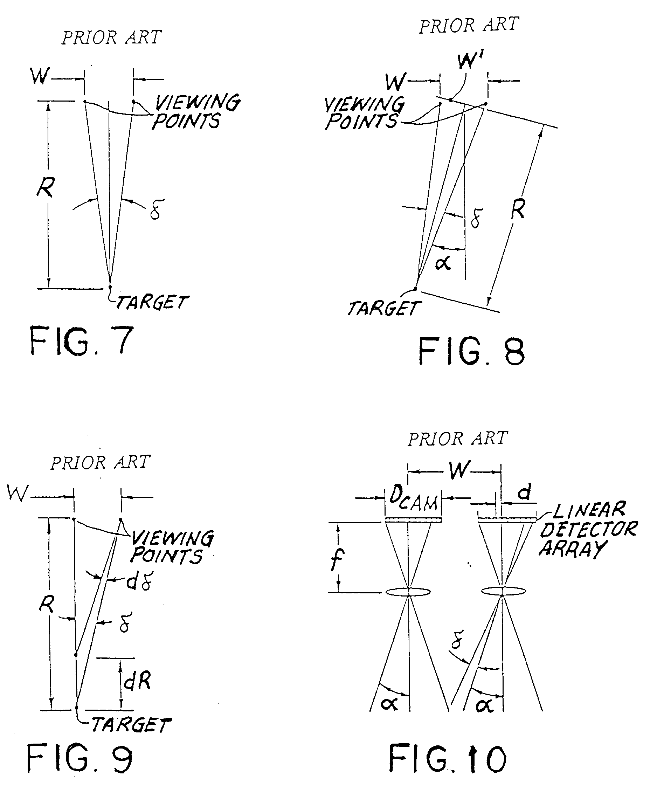

Fig. 7 illustrates the application of conventional rangefinding concepts to target location. A target is located at distance R from the viewing points separated by distance W and generates an angle $\delta$ in the case where the target lies on a axis that bisects the line connecting the two viewing points.

If the angle $\delta$ can be measured and the distance W is known, then the range R is given by

$$R = W/\delta \tag{1}$$

for small angles $\delta$, (e.g., less than 10°). For an off-axis target at angle $\alpha$, illustrated in Fig. 8, the range is given by

$$R = W \cos\alpha/\delta \tag{2}$$

For off-axis angles of 15° or less, equation (1) is sufficient for greater than 95% accuracy.

Referring to Fig. 9, in order to resolve range differences, a certain angular resolution d$\delta$ is required. This is related to range resolution dR by

$$\partial\delta = W/R^2 \, \partial R \tag{3}$$

Referring to Fig. 10 and again applying conventional rangefinding techniques, the two viewing points may comprise, for example, a pair of cameras employing CCD detector arrays of width $D_{cam}$ and detector element spacing d, each with its own lens and again separated by some distance W in order to produce the desired parallax angle $\delta$.

The two images from the cameras are compared and the relative displacement of the images is found by suitable image processing techniques such as are known in the art. Such image processing techniques are particularly described in Digital Image Processing, Second Edition, Gonzales & Wintz (Addison Wesley, 1987). The displacement data is then used to determine the range.

It may be appreciated that the detector image format of the cameras must be large enough to encompass the entire field of view over which the ranging operation is required. The detector element size d, however, must also be small enough to yield the required range resolution. For example, if the field of view is 30°, the separation between the cameras 100 mm, and the range resolution is 1 meter, at a distance of 100 meters the detector array size $D_{cam}$ and detector element size d may be calculated

$$\partial\delta = W/R^2 \, \partial R$$
$$= 0.1 \text{ m}/(100 \text{ m})^2 \times 1 \text{ m}$$
$$= 0.00001 \text{ radians.}$$

Assuming a CCD array detector for the camera in which the detector element separation is d, then the focal length f of a camera lens required to achieve the angular resolution = 0.00001 may be calculated as

$$\partial\delta = d/f$$

2

$$f = d/0.00001$$
$$= 10^5 \times d$$

State of the art CCD array detectors yield $\delta$ values near 0.015 mm. However, by signal processing the "effective $\delta$" may be assumed to be about one-half this value (i.e., $\delta_{eff} = 0.0075$ mm). Then, the focal length may be calculated as

$$f = d/\delta_{eff}$$
$$= 0.0075 \text{ mm}/0.00001$$
$$= 750 \text{ mm}$$

The detector format total width is determined by the basis field of view, 30°, and the additional field of view generated by the parallax for the nearest range target. Assuming the nearest range target at approximately 3 meters, the additional field of view is calculated as

$$\delta_{max} = W/R_{nearest}$$
$$= 0.1/3$$
$$= 0.033 \text{ radians.}$$

This is 1.90° or approximately 2°. Thus, the detector array width may be calculated as

$$D_{cam} = f \tan \alpha + f \tan (\alpha + \delta_{max})$$
$$= 750 \tan 15° + 750 \tan (15° + 2°)$$
$$= 201 + 229$$
$$= 430 \text{ mm}$$

Using the detector element size of 0.015 mm, this yields a number of detector elements, N, for each detector array

$$N = N_{cam}/d$$
$$= 430/0.015$$
$$= 28667 \text{ elements.}$$

These calculations indicate fundamental problems with the conventional dual camera rangefinder concept. In particular, required detector arrays are much too large both in physical size and number of elements for applications such as vehicle collision avoidance systems. Further, such detector arrays would also be prohibitively costly and two such arrays would be required for each vehicle collision avoidance system.

SUMMARY OF THE INVENTION

With the foregoing in mind, it is an object of the invention to provide a small compact scanning rangefinder which exhibits both large field of view and high range resolution.

It is a further object of the invention to provide a scanning optical rangefinder suitable for automobile and other vehicle collision avoidance applications wherein low cost, accuracy, reliability and ease of integration are important.

It is a further object of the invention to provide a scanning optical rangefinder which can yield a scene image on a vehicle dashboard display.

These and other objects are achieved by the optical scanner and method of claims 1 and 9, respectively. Suitable modifications and further embodiments are claimed in the dependent claims.

The invention relates to a scanning optical rangefinder comprising a radiation source, a rotating scan disc including a circular array of scanning elements on a planar surface thereof, means for directing radiation from said radiation source towards said scanning element at a plurality of channels, means for vertically scanning a field of view comprising at least one rotatable mirror, means for directing radiation from said at least one rotatable mirror towards a target, illuminating each pixel in a field of view, means for directing radiation from said target towards said scanning element along a plurality of channels, said means comprising at least one mirror integrally formed with a housing of the scanning device, detector means adapted to receive radiation reflected from said scanning element along each of said channels, characterized in that it comprises signal processing means for determining target reflectivity and range and lateral position from a signal from said detector, said signal processing means comprising means for establishing a signal threshold for signals from said detector and for rejection of extraneous signals from said detector means.

The invention further relates to a method of optical scanning comprising the steps of directing radiation from a radiation source towards a concave reflector on a rotating scan disc and to means for vertically scanning a fed of view; directing said radiation towards a target in a target scene; directing radiation reflected from said target scene towards said scan disc along a plurality of channels along at least two optical path levels; using mirrors integrally formed with a housing to direct radiation; directing radiation reflected from said scanning element along each of said channels to radiation detection means, characterized in that information from said radiation detection means is processed to determine reflectivity, range and lateral position of said target.

EP-A-4 73 866 discloses scanning optical rangefinder, and a method of optical scanning according to the preambles of claims 1 and 9 respectively.

The optical scanner comprises an optical system with two apertures separated horizontally by sufficient distance to create a parallax in viewing a near target. The two lines of sight are scanned in synchronization over the object field and the light rays which enter the two apertures are combined and brought to focus on a linear detector. If the target viewed is at infinity, only the first element of the detector array will be activated; otherwise two elements of the array will be activated; the first element by the light which enters the first of the two apertures and some other element along the array by the light which enters the second aperture. The distance along the array at which the second element is activated is inversely proportional to target range. Assurance that the two lines of sight are looking at the same object pixel at any instant is acquired by illuminating that object pixel with a laser beam which is transmitted out of one of the two channels. The intensity and spectral character of the illuminating beam allow it to be differentiated from natural illumination.

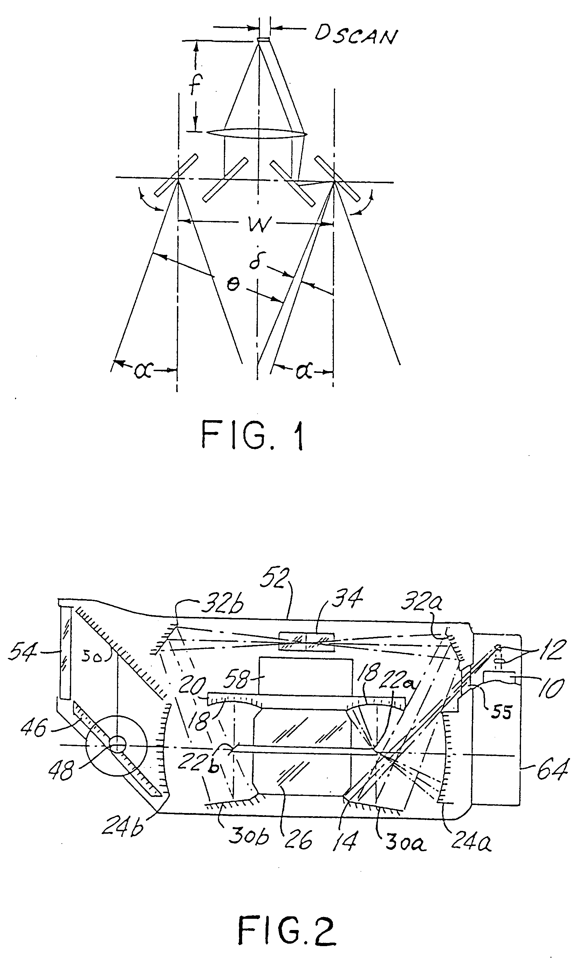

The scanning optical rangefinder concept as described above can be implemented in a variety of ways. The two lines of sight may be scanned by a pair of oscillating flat mirrors as suggested in Fig. 1. Alternately, these two mirrors can be fixed and the inner pair can be rotated about a common axis. An extension of this is to convert the inner mirrors of Fig. 1 to polygons.

A particularly advantageous implementation of the scanning optical rangefinder employs a rotating disc scanner combined with a conical strip mirror and associated image forming optics. This scanner exhibits 100% scan efficiency, high speed potential, operates with reflective optics and can be compactly packaged. The mirrored surfaces of the optical scanner may be integrally formed with the housing of the scanning optical rangefinder and the scan disc drive may be combined with the drive for the vertical scan mirror. Along with the control electronics for the detector array, signal processing may be provided for thresholding, centroid location, and spurious signal rejection.

The scanning optical rangefinder of the invention provides a system with small system size, low system cost, ready component availability, superior system safety, wide operational range, and superior data reliability. The scanning optical rangefinder may be implemented in vehicles for collision avoidance and also used in applications such as traffic control and robotics.

BRIEF DESCRIPTION OF THE DRAWINGS

The accompanying drawings illustrate the preferred embodiments of the invention and, together with description, serve to explain the principles of the invention.

Fig. 1 is a diagrammatic illustration of the operation of the basic form of the scanning optical rangefinder according to the invention.
Fig. 2 is a side sectional view of the scanning optical rangefinder.
Fig. 3 is a plan view of the lower level of the scanning optical rangefinder of Fig. 2.
Fig. 4 is a plan view of the upper level of the scanning optical rangefinder of Fig. 2.
Fig. 5 is a diagrammatic illustration of the ray bundles in the scanning optical rangefinder of Fig. 4.
Fig. 6 is a perspective schematic of the CVROS optical scanner.
Fig. 7 is a diagrammatic illustration of conventional rangefinding techniques in target location.
Fig. 8 is a diagrammatic illustration of conventional rangefinding techniques in target location for an off-axis target.
Fig. 9 is a diagrammatic illustration of angular resolution determination by conventional rangefinding techniques.
Fig. 10 is a diagrammatic illustration of detector sizing by conventional rangefinding techniques.

DETAILED DESCRIPTION OF THE DRAWINGS

Fig. 1 illustrates diagrammatically the principle of operation of the basic form of the scanning optical rangefinder of the invention. Two lines of sight are simultaneously scanned in exact synchronization with each other by two synchronized oscillating mirrors. The lines of sight are separated by distance W as shown to give rise to parallax angle $\delta$ for any target located nearer than infinity. The nearer the target the larger is the angle $\delta$. The incoming light from both channels is directed to a lens which forms an image of the pixel which is on the lines of sight. For distant targets, the pixel is identical for both lines of sight and the first detector element of a linear detector array becomes activated equally by the light from each channel. For a near target, however, a difference in detector element activation occurs and this difference is inversely proportional to range.

In order to isolate and differentiate the pixel which is on the line of sight, the pixel is illuminated by a narrow beam of light which is transmitted from one of the two channels concurrently with the scanning process, i.e., the light collection operation described above. With each line-of-sight addressing every pixel in a scene sequentially, the detector array need only be large enough to span the field of view created by the parallax. Thus, the total dimension of the array is determined by the parallax created by the nearest range target and is totally independent of the scanned field of view.

The total dimension of the detector array is given by

$$D_{scan} = f \tan \delta_{max}$$
$$= 750 \tan 2°$$
$$= 26.2 \text{ mm}$$

and the total number of elements in the detector array, N, is given by

$$N = D_{scan}/d$$
$$= 26.2/0.015$$
$$= 1747 \text{ elements.}$$

It may be appreciated that both the size and number of elements are achievable by techniques known in the art.

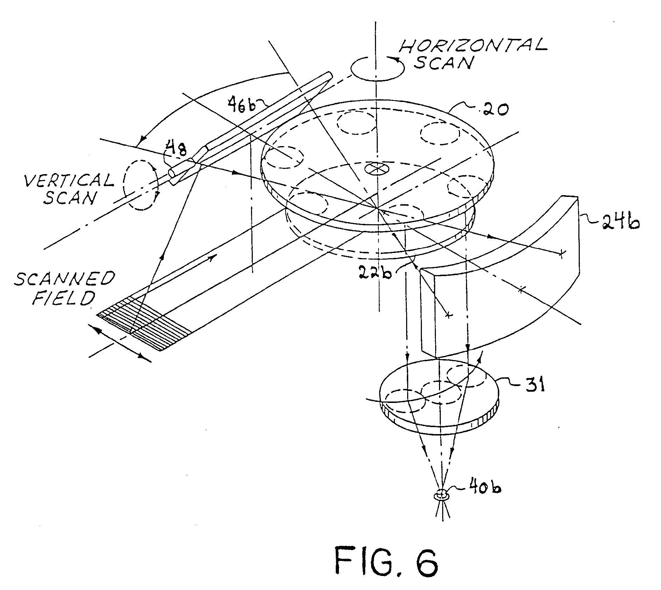

Fig. 2-5 illustrate how the scanning optical rangefinder concept can be implemented by the compact video rate optical scanner (CVROS). This device is described in US-A 4,538,181. Fig. 6, a perspective schematic of a general implementation of a CVROS scanner, is provided as an aid to understanding the invention. In this schematic, collection mirror 30b is replaced by lens 31 and field lens 42 and relay optics 44 are omitted for clarity. These particular system elements will be discussed in detail below.

The CVROS implementation of the scanning optical rangefinder embodies all of the characteristics of the basic form described above. A laser beam is transmitted out of the scanner through one of the channels and illuminates each pixel in the field of view in a sequential manner. The reflected light from each of the pixels is detected by two "read channels", a and b.

Referring to Figs. 2 to 4, a laser beam is transmitted from the scanning optical rangefinder as follows. A laser diode 10 or other intense source of radiation emits a beam of light which is shaped and redirected by laser output optics 12 to laser collimating mirror 14. Collimated light from laser collimating mirror 14 is directed onto dimple 18 of scan disc 20 in an annular area equal to the projection of the aperture of laser collimating mirror 14 onto the scan disc. After reflection from the dimple 18 the light is brought to a focus on strip mirror 22a at a large angle of incidence.

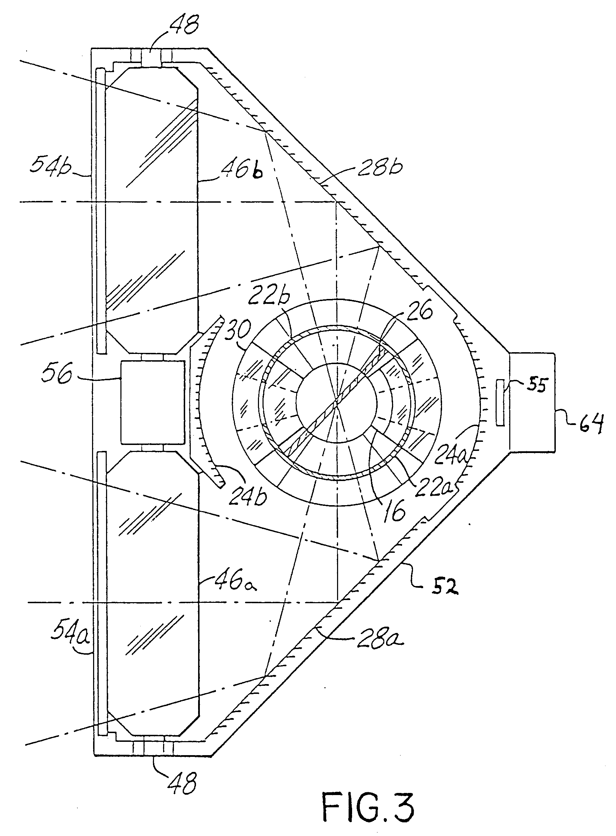

After reflection from strip mirror 22a, the light beam diverges and becomes incident on primary mirror 24a whereupon it is reflected and collimated. The collimated light then passes on to double sided mirror 26 where it undergoes a 90° change in direction, now travelling toward fold mirror 28a (Fig. 3). After reflection from fold mirror 28a, the laser beam passes on toward the target.

Light from the target enters the right and left reach channels simultaneously, and is deviated 90° by fold mirrors 28a and 28b (Fig. 3). Double sided mirror 26 redirects the light for each read channel by 90° allowing the CVROS scanner to efficiently scan two fields of view simultaneously.

Light reflected from one side of double sided mirror 26 travels to primary mirror 24a for the right read channel while light reflected from the other side of double sided mirror 26 travels to primary mirror 24b for the left read channel. Light from the primary mirrors 24a and 24b is focused onto strip mirrors 22a and 22b for each read channel.

Strip mirrors 22a and 22b are a thin slice, approximately 1 mm thick, of a reflective 45° half angle right circular cone. As such, they reflect the pencils of light rays focused on their surfaces 90° whereupon the light is intercepted by scan disc 20 having concave reflectors or dimples 18 embodied on its face.

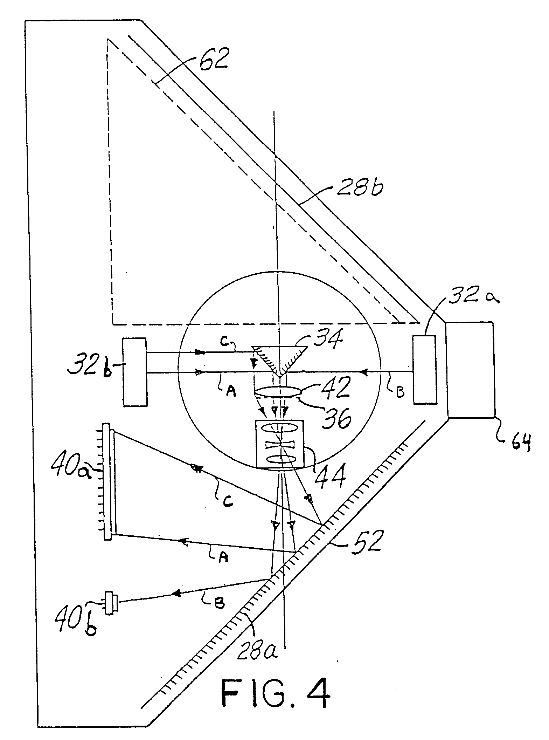

Dimples 18 have focal lengths such that incident light ray pencils are collimated after reflection from the dimples. The collimated light is intercepted by collection mirrors 30a and 30b and brought to focus after reflection from fold mirrors 32a and 32b and beam combining mirror 34 at image plane 36 (Fig 4). This image comprises the images formed by the two read channels and is relayed to respective CCD detector arrays 40a and 40b by field lens 42 and relay lens 44, a multiple element flat field anasigmat such as a Cooke Triplet or Tessar. Fold mirror 28a is utilized to reflect the light rays 90° to engage the detector arrays.

In the scanning optical rangefinder illustrated, vertical direction scanning is achieved by rotation of vertical scan mirrors 46a and 46b about pivot 48 and the line of sight is restored to its original direction after reflection from fixed mirror 50 (Fig. 3). Vertical direction scanning may also be achieved by omitting vertical scan mirrors 46a and 46b and fixed mirror 50 and rotating the entire unit, i.e., housing 52, through the required angle. Windows 54a, 54b and 55 provide a sealed interface between the outside world and the clean, dry internal environment. Vertical scan mirrors 46a and 46b are driven by vertical drive motor 56 (Fig. 3) and scan disc 20 is driven by scan disc drive motor 58 (Fig. 2). Electronics for the drive motors 56 and 58, timing circuitry and detector signal processing are housed in area 62 (Fig. 4) which contains the appropriate printed circuit boards and electronic components. Position encoders for vertical scan mirrors 46a and 46b and scan disc 20 are provided along with drive motor units 56 and 58. Electrical input power and video output data are transmitted via electrical connectors and/or direct wiring connections which can be suitably located for best overall package geometry for the particular application. Laser 10 is housed in laser module 64 which contains fins for dissipating the heat generated in driving the laser and which is heat sunk to the main housing of the scanning optical rangefinder.

As preferably embodied, the particular optical components required to assemble a scanning optical rangefinder in accordance with the invention are as follows:

| Component | Quantity | Specifications |
|---|---|---|
| Scan disc | 1 | 54 mm dia (OD), 20 mm dia (ID) |
| | | 10 dimples, sector shaped, 36° |
| | | dimple focal length = 12.7 mm |
| | | dimple contour, aspheric (hyperbola) |
| Primary Mirror | 2 | focal length 19 mm, spherical surface |
| | | aperture 21 x 44 mm |
| Strip Mirror | 2 | 38.1 mm dia x 1.0 mm thick |
| | | 45° half angle, right circular cone |
| | | active areas: 2 @ 10 mm (30°) combined in a single ring construction |
| Collection Mirror | 2 | 90 mm equivalent focal length, off-axis parabola |
| | | clear aperture: sector 36°C, $R_1$ = 10 mm, $R_2$ = 27 mm |
| Fold Mirror | 2 | flat surface (R = ∞) |
| | | clear aperture 16 mm x 8 mm |
| Beam Combining Mirror | 1 | flat surfaces (2) |
| | | clear aperture each surface, 40 mm x 10 mm |
| Field Lens | 1 | double aspheric singlet or doublet with single aspheric surface |
| | | focal length 15 mm |
| | | clear aperture 4 mm x 12 mm |
| Relay Lens | 1 | three or four element flat field, wide angle lens operating at a magnification of 5.5x; focal length 12.5 mm; nominal F/number at input F/6.5; output F/number F/35; field angle 50° |

(continued)

| Component | Quantity | Specifications |
|---|---|---|
| Fold Mirror | 2 | integral with housing |
| | | flat surfaces |
| | | clear aperture 85 mm x 22 mm on one, 85 x 45 mm on the other (due to second usage by relay lens) |
| Double Sided Mirror | 1 | flat surface |
| | | clear aperture 40 mm x 22 mm |
| Laser Input Optics | 1 | off-axis parabola to collimate light while changing the direction of the line of sight; |
| | | toroidal lens (optional) for shaping laser beam |

The particular optical specifications for the scanning optical rangefinder described herein are as follows:

(1) Afocal magnification, primary mirror and scan disc dimple:

$$M_{afoc} = \text{magnification}$$
$$= \text{Primary EFL/Dimple EFL}$$

where EFL is the equivalent focal length. Then,

$$M_{afoc} = 19.05 \text{ mm}/12.7 \text{ mm}$$
$$= 1.5$$

(2) System focal length, $f_{sys}$:

$$F_{sys} = (M_{afoc})(f_{col})(M_{relay})$$

where $f_{col}$ is the equivalent focal length of the collection mirror and $M_{relay}$ is the magnification of relay lens 44. Then,

$$F_{sys} = (1.5)(90 \text{ mm})(5.555)$$
$$= 750 \text{ mm}$$

(3) Entrance Pupil - The entrance pupil is the sector-shaped projection of a scan disc dimple. The entrance pupil is enlarged over the size of the dimple by the afocal magnification factor.

$$\text{dimple area} = A_{dimple} = 36°/260° \left[ \pi(27)^2 - \pi(10)^2 \right]$$

$$A_{dimple} = 197.6 \text{ mm}^2$$

equivalent circle diameter:

$$D_{equiv} = 4/\pi A$$
$$= 15.86 \text{ mm}$$

equivalent entrance pupil circle 23.8 mm.

The housing of the scanning optical rangefinder comprises two basic parts: a main housing and a cover plate. The main housing provides structural rigidity to maintain alignment of the optics and, as such, can be considered analogous to an optical bench. Material selection and component design are chosen to prevent warpage and any change in location of the optics internal to the housing.

The main housing can be either a machined casting or an injection molded unit. In either case, the required mounting bosses for the optics are preferably integrally formed with the main housing such that the required component alignment is achieved automatically upon insertion of the component into the housing.

If the housing is injection molded, optical quality surfaces can be achieved and components such as the fold mirror s 28a, 28b, 32a, 32b and primary mirrors 24a and 24b can be produced integral with the main housing thereby reducing component cost an assembly time. In this case, the main housing will be processed to provide the mirrors with a reflective coating.

For applications where extremely low cost is not imperative, the mirrors can be diamond turned and then integrated with the housing or cover plate.

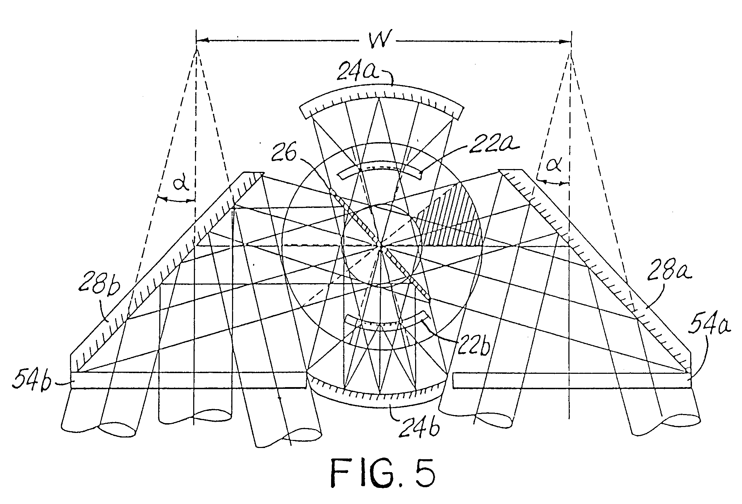

The mount for the strip mirrors 22a and 22b and the scan disc motor may also be integral with the main housing. The strip mirrors may be either a full ring or arc segments of a ring of sufficient span to cover the field of view without blocking the passing ray bundles as illustrated in Fig. 5.

The housing is effectively a two-level optical bench, one level defined by the plane of the strip mirrors 22a and 22b and the other level above is defined by the detector arrays 40a and 40b, relay lens 44 and mirrors 32a, 32b and 34. The components and their mounts are toleranced to keep the optical axis in the appropriate plane at all times except during the transfer between levels. The transfer between levels is accomplished with mirrors 30a, 30b, 32a and 32b. Double sided mirror 26 is located by a groove which is integral with or machined into the main housing. The double sided mirror in turn may be used to support the strip mirrors.

The vertical scan mirrors 46a and 46b are supported at either end by conventional bushings or roller bearings. The vertical scan mirrors 46a and 46b are driven by a motor 56 which is centrally located, as shown in Fig. 3, or can be driven indirectly through a band drive with the motor located elsewhere. Alternatively, the vertical scan mirrors may be mechanically linked to the scan disc via a gear train allowing the use of a single drive motor.

The scanning optical rangefinder is sealed via an O-ring or the like between the main housing and cover plate. The windows 54a, 54b, and 55 are "potted" into place with a suitable elastomeric type of cement.

It may be appreciated that the overall dimensions of the scanning optical rangefinder depend on the range resolution requirement and field of view.

The higher the range resolution requirement, the larger the physical size since it is the distance between the two viewing points which determines the resolution. The larger the horizontal field of view, the larger the physical size also becomes since the field of view largely determines the fold mirror size, which correspondingly determines the width of the device.

The entrance pupil size also determines the device size, in particular its height.

Fig. 5 illustrates the light bundles reflected from a target for the left and right read channels and how these bundles dictate the dimensions of the device. In this particular illustration, a 30° field and 20 mm ray bundle are shown.

For the scanning optical rangefinder described herein, the following constraints on physical size are applicable:

| | |
|---|---|
| Width | 185 mm |
| Length | 125 mm |
| Height | 55 mm |
| Horizontal field of view | 30° |
| Vertical field of view | 6° |
| Entrance Pupil | 23.8 mm |

The primary functions of the scanning optical rangefinder electronics are to: a) drive vertical scan mirrors 46a and 46b and scan disc 20 such that the optical line of sight of the scanning optical rangefinder is swept over the horizontal and vertical fields of view at the required rate while remaining synchronized; b) provide the necessary input power and clocking signals for the detector array; c) perform signal processing of the output signals from the detector array including light centroid location on the array and threshold setting; d) format the output of the detector array to a form suitable for input to an image processor. A separate external electronic unit may be used to power the laser and to modulate it, if necessary.

The scan drive electronics maintain the speed of the scan disc constant via a closed loop circuit in which feedback data on the position of the scan disc is continuously sent to the motor drive electronics. Position information may be collected via an optical encoder located either on the scan disc motor shaft or on the back surface of the scan disc itself. Similar circuitry may be used for the vertical scan mirrors; however, the motor drive for the vertical scan mirrors produces an oscillatory motion rather than a continuous circular motion. Consequently, different approaches may be utilized in its drive, e.g., a limited angle or "sector motor". A continuous drive may be employed with a cam mechanism also, as a means for achieving the oscillatory vertical scan mirror motion.

Specifications for the scanning operation of the scanning optical rangefinder described herein are as follows:

| | |
| --- | --- |
| . Frame time | 0.1 sec. |
| . Lines/frame | 12 |
| . Pixel size | 0.5° x 0.5° |
| . Vertical field of view | 6.0° |
| . Line scan time | 0.1/12 = 0.00833 sec. |
| . Horizontal field of view | 30° |
| . Pixels/line | 60 |
| . Pixel scan time | 0.00833/60 = 0.000139 sec. |
| . Scan disc number of dimples | 10 |
| . Time for single revolution of scan disc | 10 x 0.00833 = 0.0833 sec. |
| . Scan disc speed | 1/0.0833 = 12 rev/sec. = 720 rev/min. |
| . Scan disc number of dimples | 10 |
| . Scan disc speed | 1/0.0833 = 12 rev/sec. = 720 rev/min., therefore, |
| . Scan disc motor speed | 720 rev/min. |
| . Vertical scan mirror speed (assume unidirectional motor coupled to cam) | frame rate = 1/frame time = 1/0.1 sec. = 10/sec., therefore, |
| . Motor speed | 600 rev/min. |

It may be noted that the closeness of the motor speeds for the scan disc drive and the vertical scan mirror drive suggests that the assumed system parameters may be adjusted such that the two speeds are identical. It is then possible to have direct drive of a cam located on the vertical scan mirror shaft by the scan disc. This provides cost reduction by elimination of a separate motor for the vertical scan mirror.

All events in the scanning optical rangefinder are controlled in time by a master clock which emits a continuous flow of pulses at high frequency in the megahertz (MHz) range. The scan disc and the vertical scan mirror are synchronized to provide a continuous raster scan at a particular scan rate.

The detector array is read out at each pixel in the raster scan in order to determine the range for that pixel. This operation may be synchronized by the master clock through the clocking pulses used to transfer the electronic data from one cell to the next within a CCD array. Thus, at any instant in time, the azimuth and elevation coordinates of the scanned laser beam can be determined and the range for the pixel with those coordinates can be determined as well.

The CCD clocking/readout rates may be determined as follows: time to readout one pixel = pixel scan time = 0.000139 seconds. Assuming a CCD having 1750 elements, then time to readout one cell of the array $t_{CCD}$ is

$$t_{CCD} = 0.000139/1750 = 7.94 \times 10^{-8} \text{ sec.}$$

which indicates a readout rate of 12.6 MHz.

Taking into account the fact that the scan efficiency will not be 100%, rather approximate 90% and 80% for the vertical and horizontal scans, respectively, the actual readout rates will be correspondingly faster:

$$\text{CCD readout rate} = 12.6/(0.9 \times 0.8) = 17.5 \text{ MHz.}$$

This rate is within the capability of existing CCDs.

Some signal processing can be accomplished with electronic circuitry which either resides on a semiconductor chip containing the CCD detector arrays or elsewhere off the focal plane. Such circuitry is described in Dalsa, Inc., Waterloo, Ontario, Canada, 1992 Handbook, "CCD Image Sensors and Cameras". Certain signal processing function can be performed on the detector array chip, e.g., thresholding. In this case, signals falling below a certain level are automatically rejected. Also, centroid locating may be implemented wherein the centroid of a light spot on the detector array which spans several detector elements can be found. This feature allows a resolution superior to that defined by a single element of the detector array, likely to be one-half or better. Other more sophisticated signal processing can be achieved with electronics residing on separate dedicated semiconductor chips located off the focal plane. For example, certain atmospheric conditions including fog, rain or snow my produce spurious range returns. Processing algorithms built into dedicated chips may reject such extraneous signals and yield a true range return.

The data output from the signal processing electronics must be formatted suitable for input to an image processor such as are well known in the art.

The formatting circuitry provides synchronization in marks in the video train of data to designate the start-of-line and start-of-frame. These marks read the image processor to receive a stream of data which yields range data as a functions of time and, therefore, as a function of coordinates in object space.

As described above, the laser beam transmitted by the scanning optical rangefinder illuminates a target in object space and thereafter the light spot on the target is viewed simultaneously by two detectors. The light received by detector 40a enters the scanning through window 54a and is relayed optically to detector array 40b, while light received by detector 40b similarly passes through window 54b and is relayed to detector 40a by a separate relay system identical to the one used for the detector array 40b.

Reference characters A, B and C in Fig. 4 illustrate the travel of individual light rays in the upper level of the scanning optical rangefinder.

The light incident on detector 40a will vary only in intensity and not in position since the light reflected back into the scanner on this read channel follows the same path as the transmitted laser beam which originates in this read channel. The two beams, i.e., the laser transmitted beam and the reflected beam, are necessarily always coincident since they occupy the same read channel and are, therefore, scanned together.

The light incident on detector array 40a will vary both in intensity and in location along the length of the detector array. For a very distant target, the first element of the detector array, the one closest to the optical axis, will be activated. For a near target, some detector element other than the first will be activated. The nearer the target the more distant from the first element of the detector array will be located the activated element. This is because near targets illuminated by the laser seen via this read channel will generate an angular difference in the direction of the lines-of-sight and the two read channels.

Detector 40b is a single element detector which possesses the same size and photoelectric characteristics as the photoelements in the detector array 40a. Detector 40a is typically as described in the above-referenced Delsa Handbook. Briefly, the device comprises a linear array of photosensitive diodes combined with a charge coupled device (CCD). Individual diodes are approximately 0.015 mm square and there will be some 1750 diodes along the detector array. The detector array length is approximately 26 mm.

The CCD device transfers the electrons generated by the photodiode to a CCD shift register for output via a transfer gate. The signal packets which reside momentarily in the shift register are "clocked out" as a signal data stream by application of a train of clocking pulses. This is typically a high speed operation at a 17.5 MHz rate.

Exposure control to prevent blooming of intense input light signals and to create thresholds may be obtained by application of suitable control voltages to the appropriate device input terminals.

It may be appreciated that basic requirements of the scanning optical rangefinder are that it be sensitive to low level photo inputs; that the individual elements be small; and that the device be fast enough to clock out the signals over a long span of detector array elements. The scanning optical rangefinder meets these requirements when the input light wavelength is near the wavelength of peak spectral sensitivity of the photodiode. This is the case when the input light is from a laser diode of the GaAlAs type which emits light a a nominal wavelength of 0.810 nanometers and when the photodiode photosensitive material is silicon, the type employed in the device described herein.

The photodiode/CCD detector array can also be designed to incorporate additional electronic functions, ordinarily performed in a separate additional electronic unit. These include location of the position of the light spot on the detector array, and dynamic range control as described above.

While the detector array described comprises square detector element of uniform size along the length of the detector array, it may be advantageous to depart from this configuration either to improve performance or to reduce the cost of manufacture. For example, if the transmitted laser beam is not circular but rather elliptical, the illuminated spot on the target will also have this shape. Correspondingly, the image of the target spot at the detector will also have that shape. Therefore, in order to capture all of the imaged light, the detector element should have a rectangular rather than a square shape. The rectangular detector element length should be oriented at a right angle to the length of the array as the long dimension of the beam should be oriented vertically.

Additionally, for near targets the small detector element size required for high range resolution of distant targets is not required. The detector element size may then increase progressively in width along the detector array as the distance from the first detector element increases. The spectral sensitivity of the detector element can be altered to selectively react to the laser wavelength by deposition of a suitable multilayer coating on the detector element.

A laser diode is the preferred source of radiation for illuminating the target due to the level of target irradiance achieved as compared to conventional light sources. A laser diode is preferred over a gas laser because of its small size. Laser diodes are available in a standard TO-3 package commonly used in packaging solid state electronics whereas a gas laser of equivalent power level would be at least an order of magnitude greater in volume and weight. Laser drive power may be provided external to the scanning optical rangefinder.

Laser diodes may be used in either a continuous or a pulsed manner. They are available at selected wavelengths from the visible spectrum up to and including the near IR spectrum. They are commonly made as GaAlAs devices lazing in the 780 to 870 mm region of the spectrum. GaAs devices are available which laze in the 910 to 980 mm range. In the visible band, AlGaInP devices are available, and more recently GaInAsSb devices emitting light in the mid-infrared band from 1700 to 5000 nm have become available.

The GaAlAs is well suited to silicon-type detectors because the wavelength emitted is near the peak spectral sensitivity of the detector, and both are commonly available. However, lasers operating in the 780-870 mm band are potentially harmful to the human eye as are those operating in the visible band. 400-700 mm. At wavelengths grater than 1500 mm, the radiation is absorbed by the eye cornea, lens and vitreous humor and, therefore, will not damage the eye by coming to focus on the retina at very high irradiance.

This is the preferred laser wavelengths where the transmitted laser power is at a level which can yield eye damage.

Eye damage risk may also be reduced by incorporating a low power, eye safe visual light emitting diode in the laser transmitting channel as a means of alerting people of a potential eye hazard if viewed for a long period of time at close proximity. This can be accomplished by introducing the beam from the LED into the laser beam with a dichroic beam splitter.

Laser diodes typically emit a fan of radiation which is 10° x 30°. When collimated, this yields a beam which is elliptical in cross section with a 3:1 aspect ratio. In many applications, this configuration is changed by application of beam shaping optics. In a CVROS scanner, however, a beam which is elliptical in cross section and having an aspect ratio of 3:1 is well suited for illuminating the dimple of the scan disc.

It may be appreciated that the fundamental objective of the scanning optical rangefinder is to scan a certain field of view, one pixel at a time, and determine the range information for that pixel. This function ideally may be accomplished for a wide range of targets including vehicles of all types, pedestrians, animals. roadway and foreign objects in the road when applied in a vehicle collision avoidance application. The scanning optical rangefinder may do this over very short and very long ranges and at very high frame rates with high resolution in target position, both lateral position and range position.

The scanning optical rangefinder must also be capable of satisfying certain design constraints while meeting these objectives. The design constraints include:

a) small system size - the scanning optical rangefinder must be compact enough so as to not interfere with vehicle styling and to allow implementation in a vehicle environment where space is restricted;
b) low system cost - the scanning optical rangefinder must be readily manufacturable. Components must be inexpensive enough to permit a vehicle customer to be able to afford the additional cost of this collision avoidance device which integrates a wide variety and large number of components. These include optics, motors, electronic boards, detectors, a laser and various mechanical components;
c) component availability - the components of the scanning optical rangefinders must be manufacturable at low cost within a certain time frame. The facilities and equipment to manufacture the components at low most must be realizable now and not depend on undeveloped technology;
d) system safety - the scanning optical rangefinder must not provide a hazard or annoyance to pedestrians, motorists, living beings or property in general;
e) wide range of operation - the scanning optical rangefinder should meet minimum performance standards independent of weather and atmospheric conditions; and
f) data reliability - low false alarm rate must exist to maintain vehicle operator confidence and provide critical information in a timely manner without false indications often occurring.

The system objectives and design constraints described above are frequently odds with each other and, therefore, require certain trade offs. For example, the size of the scanning optical rangefinder is closely related to the aperture size of the device. The maximum range performance of the scanning optical rangefinder is dependent on the radiant power incident on the detector, which in turn, is dependent on the aperture size. This relationship between power received at the detector and the aperture size can be shown to be the following:

$$P_{det} = r\eta\, P_{las}\, D^2_{aper}\, T^2/4R^2 \qquad (4)$$

where

| $P_{det}$ | = radiant power received at the detector |
|---|---|
| $P_{las}$ | = radiant power output by the laser |
| T | = transmission of scanner |
| $\eta$ | = power utilization efficiency laser |
| r | = target reflectivity |
| R | = range to the target |
| $D_{aper}$ | = diameter of scanner aperture |

Thus, if the diameter of the aperture size is increased by a factor of 2, for example, then the power received at the detector is increased by a factor of 4. This increase in radiant power collected by the detector translates into a correspondingly greater signal to noise ratio at the output of the detector and a corresponding increase in range performance.

For the scanning optical rangefinders to make timely calculations on the closing rate of an approaching vehicle, the difference in range of the vehicle from one scan frame to the next must be accurately determined. It has been shown previously that the difference in range gives rise to a difference in viewing angle at the two viewing points of a rangefinder that employs the triangulation principle:

$$d\delta = W/R2\ dR$$

where

| $d\delta$ | = the difference in viewing angle at the two viewing points; |
|---|---|
| dR | = the difference in range between a target at two different times; |
| W | = separation between the two viewing points; |
| R | = Range. |

Thus, as the separation between the two viewing points is increased, the range resolution improves.

It may be appreciated from Fig. 5 that the overall width of the scanning optical rangefinder must be increased to accommodate wider fields of view.

This is due to the spread of the beam of light and the distance between the point of divergence of the beam of light and the fold mirrors 28a and 28b - the greater the distance, the greater the "footprint" of the light spot on the fold mirrors - and the greater the footprint, the greater the mirror size and overall width of the device.

Equation (4) gives the relationship between the power received at the detector and the power transmitted by the laser. This is a direct relationship so that the range performance will increase by 2 if the laser power is doubled according to equation (4). The relationship between target reflectivity and power received at the detector is exactly the same. Therefore, to range on distant targets which exhibit low reflectivity, high laser power is required. Laser power level, however, cannot be raised without limit because of potential eye damage. Larger lasers required to generate larger radiant power output are also undesirable for reasons including large size, large power consumption, large cost and large heat dissipation problems. Since system range performance will degrade under poor atmospheric conditions, but can be restored by transmitting more laser power, the system "cost" of achieving long range performance under all weather conditions becomes apparent.

The greater the number of pixels within a given field of view, the more accurately the position of a target can be determined. Also, the greater the number of frames of data per transmit time, the more accurately the velocity and acceleration of the target will be known. However, the greater number of pixels per frame and the greater number of frames per second lead directly to a greater data rate flowing out of the detector array. This rate is limited by the bandwidth capability of the processing electronics.

In particular, the readout of the CCD detector array must occur during the pixel dwell time of the detector, which becomes shorter as the number of pixels per frame increases and the number of frames per second increases.

For the scanning optical rangefinder described herein, the number of pixels per frame and the frame rate, 720 pixels/frame and 10 frames/second, respectively, are about one-half the limit of what can be achieved with the CCD detector array described. The data rate of this detector in the configuration of the embodiment of the invention described herein is of the order of 18 MHz. Future detectors will operate faster thereby allowing higher scan rates and pixel counts of the device.

A complete vehicle collision avoidance system comprises the subject scanning optical rangefinder, an image processor, a controller, an operator audio or visual information display and a brake actuator device. Of these, only the scanning optical rangefinder needs to be strategically located in the vehicle to ensure optimum system performance. The scanning optical rangefinder requires placement on the centerline of the vehicle. It can be externally mounted in the grill or styled into a hood, or it can be internally mounted on the dashboard or in the area of the rear view mirror of the roof with suitable styling modifications made in either case. The optimum position for a particular vehicle may be determined from a modeling exercise in which elevation, vertical field of view, and hill slope variables are taken into account.

The image processor and controller are electronic units, basically computers with suitable input/output ports. They can be integrated into the computer already in place in the vehicle design with suitable modifications. Operator information can be audio, visual, or both with the devices integrated into the existing dashboard operator display. Brake actuators may be those now in place for anti-lock braking systems.

The scanning optical rangefinder described herein can also be modified to yield an image which can be displayed on a CRT or flat panel display at the operator station or elsewhere. In the manner of US-A-4,538,181 infrared images can be implemented in either or both read channels. In the latter case, a stereoscopic image display may be provided by using alternating fields in the raster display for the left and right eye. This can be accomplished by using shuttered LCD viewing glasses or similar techniques. This passive IR stereo TV system could operate in the 3-5 micron or 8-12 micron band depending on detector and detector cooling choice.

Passive IR images as described above could be employed in one of the two channels and exist concurrently with the rangefinder. This would be accomplished by inserting a dichroic beam splitter into the optical path in the area before combining mirror 34 and fold mirror 32a on the side of combining mirror 34 on which ray B exists. An intermediate image which is nearly parfocal to the image at image plane 36 would be formed just after the dichroic splitter and would be focused on a TDI detector such as a SPRITE.

Active imaging using the laser employed for the rangefinding function is also possible with suitable processing of the data to sort out differences in target reflectance versus signal strength received from more distant higher reflectance targets.

Under certain circumstances, a more complex detector array which includes a second dimension for the vertical field of view may be preferable to scanning the vertical field as previously described herein. The limitations to this approach are the increased cost and limited availability of such a detector array and, more importantly, the limitations on the size of the field of view which can be imaged without large aberrations arising. These limitations may also impair range resolution.

Advantageously, when suitably configured, the vertical mirror can be controlled to vary its excursion. This could be operator selectable or preferably automatic when road and traffic conditions indicate a change for improved system performance.

The scanning optical rangefinder described herein also has application in fields other than vehicle collision avoidance. Multiple units can be configured into an intelligent traffic controller located at busy intersections or temporarily located at traffic congestions areas. Multiple devices may be integrated to cover 360° in azimuth and 45° in elevation on the case of permanent installation at an intersection.

Since the traffic controller must analyze images which are occurring over 360° in azimuth and some 45° in elevation, an extremely large number of pixels are generated. Further, the images are time varying. These facts combine to result in an enormous data processing task. The computing task may be within the capability of advanced computers which can be located integrally with the controller on site. Alternately, the data can be compressed and transmitted via wireless transmission or fiber optic transmission to a central mainframe computer site. This central computing site would process the data, make decision on traffic control and return them to the site from which the data originated. Employing super computers or banks of computers, control of the traffic over many sites or even towns or cities would be possible. Real time imagery at any installation site would be operator selectable and viewable at a command center or police station.

It may be appreciated that an effective traffic control system must be capable of quickly analyzing a large number of targets within a field of view. Advantageously, the scanning optical rangefinder according to the invention can accommodate such processing requirements. Information on vehicles, pedestrians and other targets may be accumulated in pixel maps and analyzed at a speed high enough to provide meaningful assessment of traffic flow in each direction at an intersection.

As the system incorporates a computer, the traffic controller may continually process object data within its field of view and make decisions for stopping traffic, allowing pedestrian crossing, or the like. It would eliminate considerable fuel waste which occurs when vehicles must wait at traffic lights when there is no traffic flow in the cross direction and could issue special warnings to motorists when pedestrians are crossing. Such a system may also incorporate an imag-

13

ing feature to record traffic violations and data on the violators such as license plate number.

Other applications of the scanning optical rangefinder include robotics for factory automation ad space and military applications. Range information greatly eases the image processing task now performed with "smart systems" which employ images. The procedures currently employed to extract range information indirectly from a multiplicity of images require substantial computation time and the elimination of the range determination procedure would speed up the overall image processing function greatly.

While the invention has been described in its preferred embodiments, it is to be understood that the words which have been used are words of description, rather than limitation, and that changes maybe made within the purview of the appended claims without departing from the scope of the invention.

**Claims**

1. A scanning optical rangefinder comprising

    a radiation source (10);
    a rotating scan disc (20)) including a circular array of scanning elements (18) on a planar surface thereof;
    means for directing radiation from said radiation source (10) towards said scanning element (18) at a plurality of channels;
    means for vertically scanning a field of view comprising at least one rotatable mirror (26, 46a, 46b);
    means for directing radiation from said at least one rotatable mirror (26, 46a, 46b) towards a target, illuminating each pixel in a field of view;
    means for directing radiation from said target toward said scanning element (18) along a plurality of channels, said means comprising at least one mirror (24a, 24b, 28a, 28b, 32a, 32b) integrally formed with a housing (52) of the scanning device;
    detector means (40a, 40b, Fig. 4) adapted to receive radiation reflected from said scanning element (18) along each of said channels;
    characterized in that it comprises
    signal processing means (62, Fig. 4) for determining target reflectivity and range and lateral position from a signal from said detector (40a, 40b), said signal processing means comprising means for establishing a signal threshold for signals from said detector and for rejection of extraneous signals from said detector means.

2. The scanning device of claim 1, further comprising signal processing means for target imaging.

3. The scanning device of claim 1, wherein said signal processing means comprises signal processing means for centroid location on said detector.

4. The scanning device of claim 1, wherein said means for vertically scanning further comprises means for translating a housing of the scanning device.

5. The scanning device of claim 1, wherein the device has at least two optical path levels.

6. The scanning device of claim 5, wherein radiation directed from said radiation source (10) to said target travels along one of the same channels as radiation directed from said target to said detector (40a, 40b).

7. The scanning device of claim 1, wherein said detector means adapted to receive radiation reflected from said scanning element (18) along each of said channels further comprises a single element detector and a detector array (40b, Fig. 4).

8. The scanning device of claim 1, wherein said radiation source is a GaAlAs laser.

9. A method of optical scanning, comprising the steps of

    directing radiation from a radiation source (10) towards a concave reflector (18) on a rotating scan disc (20) and to means for vertically scanning a field of view;
    directing said radiation towards a target in a target scene;
    directing radiation reflected from said target scene towards said scan disc (20) along a plurality of channels along at least two optical path levels;
    using mirrors (24a, 24b, 28a, 28b, 32a, 32b) integrally formed with a housing to direct radiation;

directing radiation reflected from said scanning element (18) along each of said channels to radiation detection means;

characterized in that information from said radiation detection means is processed to determine reflectivity, range and lateral position of said target.

10. The method of claim 9, further comprising the step of directing light from said radiation source (10) to said target and at least some light from said target along the same channel.

11. The method of claim 9, further comprising the step of locating the centroid of radiation reflected from said target.

**Patentansprüche**

1. Ein optischer Abtast-Entfernungsmesser mit folgenden Bauteilen:

einer Strahlungsquelle (10);

einer rotierenden Abtastscheibe (20) mit einer kreisförmigen Anordnung von Abtastelementen (18) auf einer ihrer planen Oberflächen;

einer Vorrichtung zum Richten von Strahlung in einer Vielzahl von Kanälen von der Strahlungsquelle (10) auf die genannten Abtastelemente (18);

einer Vorrichtung zum vertikalen Abtasten eines Gesichtsfeldes mit mindestens einem drehbar angeordneten Spiegel (26, 46a, 46b);

einer Vorrichtung zum Richten von Strahlung von mindestens einem der genannten drehbar angeordneten Spiegel (26, 46a, 46b) auf ein Ziel und Beleuchten jedes Bildelements (Pixels) in einem Gesichtsfeld;

einer Vorrichtung zum Richten der Strahlung vom genannten Ziel auf das genannte Abtastelement (18) entlang einer Vielzahl von Kanälen, wobei die genannte Vorrichtung mindestens einen, mit dem Gehäuse der Abtastvorrichtung integrierten Spiegel (24a, 24b, 28a, 28b, 32a, 32b) aufweist;

einer Detektor-Vorrichtung (40a, 40b, Fig. 4) geeignet zum Auffangen von vom Abtastelement (18) reflektierter Strahlung entlang eines jeden der genannten Kanäle;

**dadurch gekennzeichnet, daß** der optische Abtast-Entfernungsmesser eine Vorrichtung zum Verarbeiten von Signalen (62, Fig. 4) aufweist zum Bestimmen der Zielreflektivität und der Entfernung und der lateralen Position eines Signals von der genannten Detektor-Vorrichtung (40a, 40b), wobei die Vorrichtung zum Verarbeiten der Signale eine Vorrichtung aufweist zum Erzeugen eines Schwellensignals für Signale und zum Zurückweisen von Fremdsignalen vom genannten Detektor.

2. Die Abtastvorrichtung von Anspruch 1, die weiterhin eine Vorrichtung zum Verarbeiten von Signalen für die Zieldarstellung aufweist.

3. Die Abtastvorrichtung von Anspruch 1, bei der die Vorrichtung zum Verarbeiten von Signalen eine Vorrichtung zum Verarbeiten von Signalen für die zentrale Ausrichtung in Bezug auf den genannten Detektor aufweist.

4. Die Abtastvorrichtung von Anspruch 1, bei der die Vorrichtung zum vertikalen Abtasten weiterhin eine Vorrichtung zum Verschieben eines Gehäuses der Abtastvorrichtung aufweist.

5. Die Abtastvorrichtung von Anspruch 1, bei der diese mindestens zwei Ebenen im optischen Weg aufweist.

6. Die Abtastvorrichtung von Anspruch 1, bei der die von der Strahlungsquelle (10) auf das Ziel gerichtete Strahlung in einem der gleichen Kanäle wie die vom genannten Ziel auf den Detektor (40a, 40b) gerichtete Strahlung verläuft.

7. Die Abtastvorrichtung von Anspruch 1, bei der die Detektor-Vorrichtung, die die vom Abtastelement (18) reflektierte Strahlung entlang jedem der genannten Kanäle empfängt, weiterhin einen Einzelelement-Detektor sowie eine Detektoranordnung (40b, Fig. 4) aufweist.

8. Die Abtastvorrichtung von Anspruch 1, bei der die Strahlungsquelle ein GaAlAs-Laser ist.

9. Ein Verfahren zum optischen Abtasten mit den folgenden Verfabrensschritten:

Richten der von einer Strahlungsquelle (10) kommenden Strahlung auf einen konkaven Reflektor (18) auf einer rotierenden Abtastscheibe (20) und auf eine Vorrichtung zum vertikalen Abtasten eines Gesichtsfeldes;

Richten der genannten Strahlung auf ein Ziel in einem Zielgebiet;

Richten der von dem genannten Ziel reflektierten Strahlung auf die genannte Abtastscheibe (20) entlang einer Vielzahl von Kanälen in mindestens zwei Ebenen im optischen Weg;

Verwenden von mit einem Gehäuse einen integralen Teil bildenden Spiegeln (24a, 24b, 28a, 28b, 32a, 32b) zum Richten der Strahlung;

Richten der vom genannten Abtastelement (18) reflektierten Strahlung entlang jedem der genannten Kanäle auf die Strahlungsdetektor-Vorrichtung,

**dadurch gekennzeichnet, daß** Information von der genannten Strahlungsdetektor-Vorrichtung dazu dient, um Reflektivität, Entfernung und laterale Position des Ziels zu bestimmen.

10. Das Verfahren nach Anspruch 9, das weiterhin den Schritt zum Richten der von der Strahlungsquelle (10) kommenden Strahlung auf das Ziel und mindestens eines Teils der Strahlung vom Ziel entlang des gleichen Kanals aufweist.

11. Das Verfahren nach Anspruch 9, das weiterhin den Schritt zum Bestimmen des Schwerpunktes der vom Ziel reflektierten Strahlung aufweist.

**Revendications**

1. Télémètre optique à balayage comprenant

une source de rayonnement (10),
un disque de balayage en rotation (20) comprenant un réseau circulaire d'éléments de balayage (18) sur une surface plane de celui-ci,
un moyen destiné à diriger un rayonnement provenant de ladite source de rayonnement (10) en direction dudit élément de balayage (18) sur un certain nombre de canaux,
un moyen destiné à balayer verticalement un champ de vision comprenant au moins un miroir rotatif (26, 46a, 46b),
un moyen destiné à diriger un rayonnement provenant dudit au moins un miroir rotatif (26, 46a, 46b) en direction d'un cible, en illuminant chaque pixel dans un champ de vision,
un moyen destiné à diriger un rayonnement provenant de ladite cible en direction dudit élément de balayage (18) suivant un certain nombre de canaux, ledit moyen comprenant au moins un miroir (24a, 24b, 28a, 28b, 32a, 32b) fabriqué de façon intégrée à un boîtier (52) du dispositif de balayage,
un moyen de détecteur (40a, 40b, figure 4) conçu pour recevoir un rayonnement réfléchi à partir dudit élément de balayage (18) suivant chacun desdits canaux, caractérisé en ce qu'il comprend
un moyen de traitement du signal (62, figure 4) destiné à déterminer un facteur de réflexion de cible et une position en distance et latérale à partir d'un signal provenant dudit détecteur (40a, 40b), ledit moyen de traitement du signal comprenant un moyen destiné à établir un seuil de signal pour des signaux provenant dudit détecteur et en vue du rejet des signaux étrangers provenant dudit moyen de détecteur.

2. Dispositif de balayage selon la revendication 1, comprenant en outre un moyen de traitement du signal en vue d'une formation d'image de la cible.

3. Dispositif de balayage selon la revendication 1, dans lequel ledit moyen de traitement du signal comprend un moyen de traitement du signal en vue de la localisation du centre de gravité sur ledit détecteur.

4. Dispositif de balayage selon la revendication 1, dans lequel ledit moyen destiné à balayer verticalement comprend en outre un moyen destiné à translater un boîtier du dispositif de balayage.

5. Dispositif de balayage selon la revendication 1, dans lequel le dispositif comporte au moins deux niveaux de trajets optiques.

6. Dispositif de balayage selon la revendication 5, dans lequel un rayonnement orienté depuis ladite source de rayonnement (10) vers ladite cible se propage suivant l'un des mêmes canaux que le rayonnement orienté depuis ladite cible vers ledit détecteur (40a, 40b).

7. Dispositif de balayage selon la revendication 1, dans lequel ledit moyen de détecteur conçu pour recevoir un rayonnement réfléchi à partir dudit élément de balayage (18) suivant chacun desdits canaux comprend en outre un détecteur à un seul élément et un réseau de détecteurs (40b, figure 4).

8. Dispositif de balayage selon la revendication 1, dans lequel ladite source de rayonnement est un laser à GaAlAs.

9. Procédé de balayage optique, comprenant les étapes consistant à

diriger un rayonnement provenant d'une source de rayonnement (10) en direction d'un réflecteur concave (18) sur un disque de balayage en rotation (20) et vers un moyen destiné à balayer verticalement un champ de vision,
diriger ledit rayonnement en direction d'une cible dans une scène cible,
diriger un rayonnement réfléchi à partir de ladite scène cible en direction dudit disque de balayage (20) suivant un certain nombre de canaux le long d'au moins deux niveaux de trajets optiques,
utiliser des miroirs (24a, 24b, 28a, 28b, 32a, 32b) fabriqués de façon intégrée à un boîtier afin d'orienter un rayonnement,
diriger un rayonnement réfléchi depuis ledit élément de balayage (18) suivant chacun desdits canaux vers un moyen de détection de rayonnement, caractérisé en ce que
des informations provenant dudit moyen de détection de rayonnement sont traitées pour déterminer un facteur de réflexion, une position en distance et latérale de ladite cible.

10. Procédé selon la revendication 9, comprenant en outre l'étape consistant à orienter la lumière provenant de ladite source de rayonnement (10) vers ladite cible et au moins une partie de la lumière provenant de ladite cible suivant le même canal.

11. Procédé selon la revendication 9, comprenant en outre l'étape consistant à localiser le centre de gravité du rayonnement réfléchi à partir de ladite cible.

FIG. 1

FIG.2

FIG.3

FIG. 4

FIG. 5

FIG. 6

PRIOR ART

FIG. 7

PRIOR ART

FIG. 8

PRIOR ART

FIG. 9

PRIOR ART

FIG. 10